# EUROPEAN PATENT SPECIFICATION

(11) **EP 3 955 172 B1**
(45) Date of publication and mention of the grant of the patent: **01.04.2026**
(21) Application number: 21190639.1
(22) Date of filing: 10.08.2021
(51) Int. Cl.: G06N 3/063, G06N 3/084

(54) **RUNTIME HYPER-HETEROGENEOUS OPTIMIZATION FOR PROCESSING CIRCUITS EXECUTING INFERENCE MODEL**
HYPERHETEROGENE LAUFZEITOPTIMIERUNG FÜR VERARBEITUNGSSCHALTUNGEN ZUR AUSFÜHRUNG VON INFERENZMODELLEN
OPTIMISATION HYPER-HÉTÉROGÈNE DU TEMPS D'EXÉCUTION POUR DES CIRCUITS DE TRAITEMENT EXÉCUTANT UN MODÈLE D'INFÉRENCE

(30) Priority: 11.08.2020 US 202063063992 P; 08.08.2021 US 202117396762
(43) Date of publication of application: 16.02.2022
(73) Proprietor: MediaTek Inc., Hsin-Chu 300 (TW)
(72) Inventor: WANG, Wei-Tong, 30078 Hsinchu City (TW); HSIEH, Pei-Chi, 30078 Hsinchu City (TW); JHANG, Hong-Ruei, 30078 Hsinchu City (TW); CHANG, Shu-Hsin, 30078 Hsinchu City (TW); LIN, Tzueng-Yau, 30078 Hsinchu City (TW)
(74) Representative: Haseltine Lake Kempner LLP

(56) References cited:
- WO-A1-2017/075360
- MART\'IN ABADI ET AL: "TensorFlow: Large-Scale Machine Learning on Heterogeneous Distributed Systems", ARXIV.ORG, CORNELL UNIVERSITY LIBRARY, 201 OLIN LIBRARY CORNELL UNIVERSITY ITHACA, NY 14853, 14 March 2016 (2016-03-14), XP080689634

## Description

This application claims the priority of US Provisional Application No. 63/063,992 (filed on August 11th, 2020).

### Background

Recently, an electronic device such as a personal computer, a notebook or a cell phone generally has two or more processors for executing different tasks. However, when a complex model such as an artificial intelligence (Al) model is running, and the accurate and fast results are required, how to use the processors to execute the model becomes a problem. For example, if the electronic device comprises a central processing unit (CPU), a graphics processing unit (GPU) and a vision processing unit (VPU), and only the CPU is arranged to execute the whole model, the GPU and the VPU may not be fully utilized, and it may cause the CPU to be overloaded and the processing time may be too long. In another case, most of the models may be executed by one processor such as CPU, and the other processors are only used to execute the operations that are not supported by the CPU, however, the processors may have much idle time, and the processors need to synchronize the intermediate result.

WO 2017/075360 A1 describes methods, systems, and apparatus, including computer programs encoded on computer storage media, for receiving, by a computational graph system, a request to process a computational graph, and obtaining data representing a subgraph of the computational graph.

### Summary

It is therefore an objective of the present invention to provide a runtime hyper-heterogeneous processes optimization method, to solve the above-mentioned

The present invention is defined by the appended claims.

### Brief Description of the Drawings

FIG. 1 is a diagram of deploying a model to an electronic device according to one embodiment of the present invention.
FIG. 2 is a flowchart of the H2O engine according to one embodiment of the present invention.
FIG. 3 is a flowchart of the H2O engine according to another embodiment of the present invention.
FIG. 4 shows a graph partition of a model according to one embodiment of the present invention.
FIG. 5 shows a graph partition of a model according to another embodiment of the present invention.

### Detailed Description

Certain terms are used throughout the following description and claims to refer to particular system components. As one skilled in the art will appreciate, manufacturers may refer to a component by different names. This document does not intend to distinguish between components that differ in name but not function. In the following discussion and in the claims, the terms "including" and "comprising" are used in an open-ended fashion, and thus should be interpreted to mean "including, but not limited to ...". The terms "couple" and "couples" are intended to mean either an indirect or a direct electrical connection. Thus, if a first device couples to a second device, that connection may be through a direct electrical connection, or through an indirect electrical connection via other devices and connections.

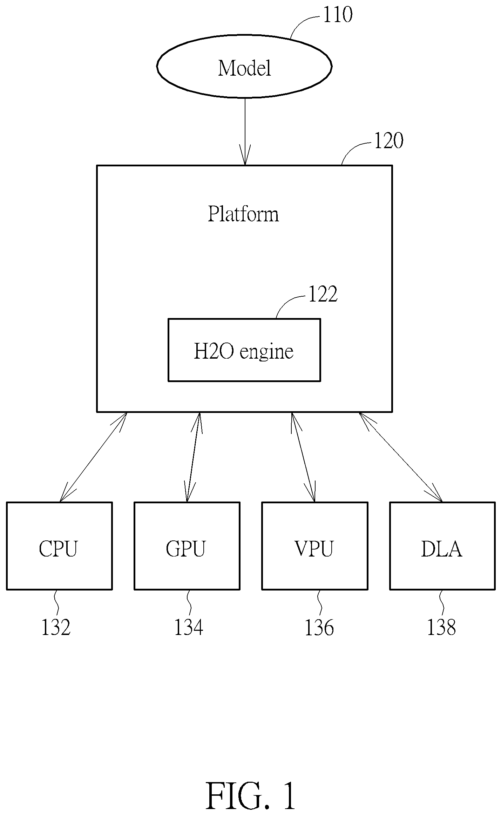

FIG. 1 is a diagram of deploying a model 110 to an electronic device according to one embodiment of the present invention. As shown in FIG. 1, the electronic device comprises a plurality of processing circuits such as a CPU 132, a GPU 134, a VPU 136 and a deep learning accelerator (DLA) 138, and an platform 120. The platform 120 is a software platform which can be implement by using the CPU 132 to execute program codes stored in a memory of the electronic device, and the platform 120 may deploy the model 110 to at least part of the processing circuits, so that the at least part of processing circuits can execute the model 110. In this embodiment, the model 110 may generally be referred to as an inference model and can include any of a variety of models arranged to generate output data (e.g., inference) from input data. For example, the model 110 may be an inference model or an artificial neural network model.

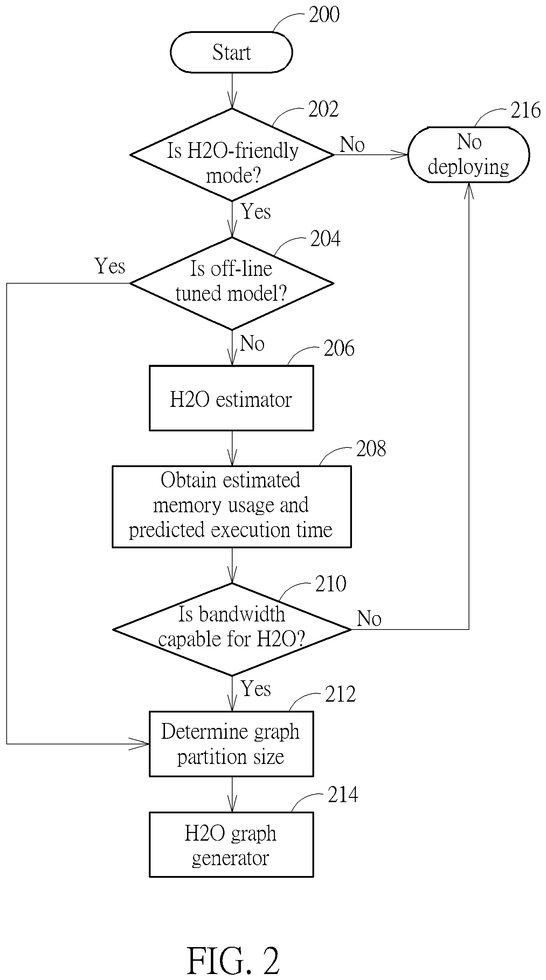

The platform 120 has a hyper-heterogeneous optimization (H2O) engine 122, wherein the H2O engine 122 is used to analyze the model 110 and/or train the model 110, so that the model 110 can be partitioned into at least one computational graph that is/are to be executed by at least one processing circuit. Specifically, FIG. 2 is a flowchart of the H2O engine 122 according to one embodiment of the present invention. In Step 200, the flow starts, and the platform 120 loads the model 110. In Step 202, the H2O engine 122 determines if the model 110 is H2O-friendly model, if yes, the flow enters Step 204; and if not, the flow enters Step 216. In one embodiment, the H2O engine 122 may refer to shape of the model 110 to determine if the model 110 is H2O-friendly model, for example, if the model 110 has operations that down-sample too much data, the model 110 is not H2O-friendly model. Specifically, if the model 110 comprises an operation that greatly reduces the image resolution such as the ratio of image resolution reduction is greater than a threshold (e.g., the image resolution is reduced from 640*480 to 32*24), the processing circuits such as the CPU 132 and/or the GPU 134 may need to perform complex compensation operations, therefore, the model 110 is not H2O-friendly model. In addition, if the model 110 does not comprise the operations that down-sample too much data, and/or the operations of the model 110 can be easily divided into two or more graphs without increasing too many additional operations, the model 110 can be regarded as the H2O-friendly model. In Step 204, the H2O engine 122 determines if the model 110 is an offline-tuned model, that is the H2O engine 122 determines if the model 110 has been analyzed and trained offline, if yes, the flow enters Step 212; and if not, the model 110 can be regarded as an unknown model, and the flow enters Step 206.

In Step 206, the H2O engine 122 estimates the model 110 to predict the inference time and memory usage if the model 110 is executed by one or more processing circuits. For example, the H2O engine 122 can use a gradient boosting model such as a LGBM model to estimate the model 110 to obtain the estimated memory usage and predicted execution time (Step 208). The LGBM model is an artificial intelligence algorithm skill that can be used for all kinds of modeling and prediction. Specifically, for an operation run by a processing circuit, the LGBM model can sequentially establish many trees, wherein a first tree outputs a first result based on input data, a second tree is used to leverage the first tree and outputs a second result based on the input data, a third tree is used to leverage the second tree and outputs a third result based on the input data, a fourth tree is used to leverage the third tree and outputs a fourth result based on the input data, ... etc.. Then, the performance prediction of the operation run by the processing circuit can be obtained by adding the multiple results of the trees. Because the LGBM model is open source distributed, and a person skilled in the art should understand the operations of the LGBM model, further descriptions of the LGBM model are omitted here.

Step 210, the H2O engine 122 determines if the bandwidth is capable for the using two or more processing circuits to execute the model 110. If yes, the flow enters Step 212; and if not, the flow enters Step 216.

In step 212, the H2O engine 122 determines the graph partition size for two or more processing circuits, that is, the H2O engine 122 can determine the workloads or number of operations of two or more processing circuits. In Step 214, the H2O engine 122 generates the graph for two or more processing circuits. For example, if the CPU 132 and the GPU 134 are determined to run the model 110, the H2O engine 122 may partition the model 110 into a first graph and a second graph, and the CPU 132 will run the operations of the first graph, while the GPU 134 will run the operations of the second graph.

In Step 216, the H2O engine 122 does not deploy the model 110 to more processing circuits, that is, the model 110 may only be executed by the CPU 132.

In the embodiment shown in FIG. 2, when the model 110 is an unknown model for the platform 120 (e.g., the platform 120 has never process this model before), the H2O engine 122 can perform runtime model analysis and runtime bandwidth estimation to partition the model 110 to generate two or more graphs for two or more processing circuits. Therefore, the model 110 can be executed efficiently.

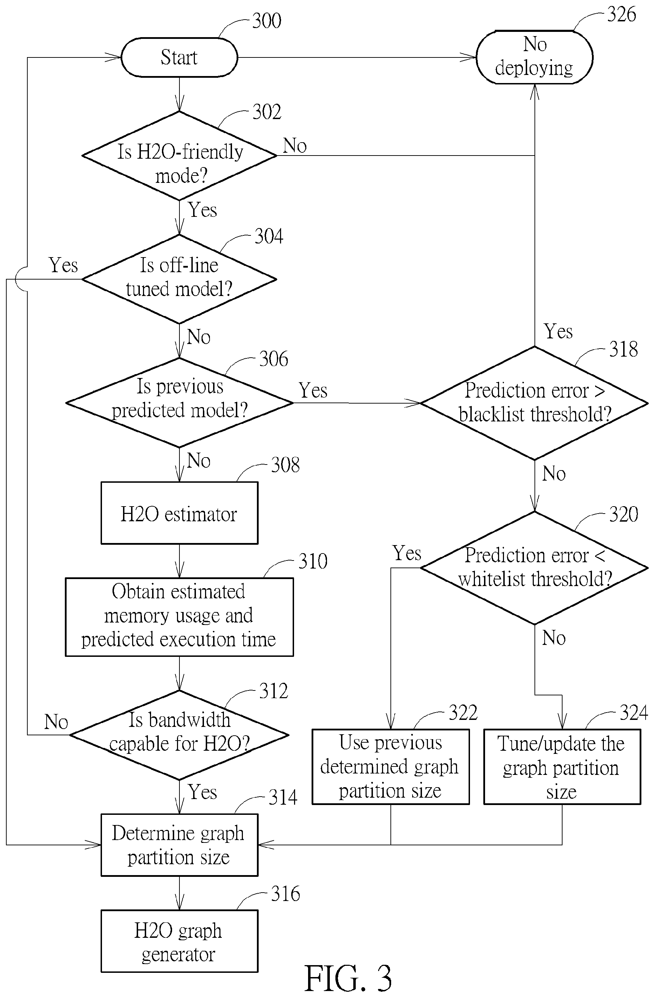

FIG. 3 is a flowchart of the H2O engine 122 according to another embodiment of the present invention. In Step 300, the flow starts, and the platform 120 loads the model 110. In Step 302, the H2O engine 122 determines if the model 110 is H2O-friendly model, if yes, the flow enters Step 304; and if not, the flow enters Step 326. The H2O engine 122 may refer to shape of the model 110 to determine if the model 110 is H2O-friendly model, for example, if the model 110 has operations that down-sample too much data, the model 110 is not H2O-friendly model. Specifically, if the model 110 comprises an operation that greatly reduces the image resolution such as the ratio of image resolution reduction is greater than a threshold (e.g., the image resolution is reduced from 640*480 to 32*24), the processing circuits such as the CPU 132 and/or the GPU 134 may need to perform complex compensation operations, therefore, the model 110 is not H2O-friendly model. In addition, if the model 110 does not comprise the operations that down-sample too much data, and/or the operations of the model 110 can be easily divided into two or more graphs without increasing too many additional operations, the model 110 can be regarded as the H2O-friendly model. In Step 304, the H2O engine 122 determines if the model 110 is an offline-tuned model, that is, the H2O engine 122 determines if the model 110 has been analyzed and trained offline, if yes, the flow enters Step 314; and if not, the flow enters Step 306.

In Step 306, the H2O engine 112 determines if the model 110 has been analyzed and predicted by the H2O engine 112 before. If yes, the flow enters Step 318; and if not, the model 110 can be regarded as an unknown model, and the flow enters Step 308.

In Step 308, the H2O engine 122 estimates the model 110 to predict the inference time and memory usage. For example, the H2O engine 122 can use a gradient boosting model such as a LGBM model to estimate the model 110 to obtain the estimated memory usage and predicted execution time (Step 310). Because the LGBM model is open source distributed, and a person skilled in the art should understand the operations of the LGBM model, further descriptions of the LGBM model are omitted here.

Step 312, the H2O engine 122 determines if the bandwidth is capable for the using two or more processing circuits to execute the model 110. If yes, the flow enters Step 314; and if not, the flow goes back to Step 300.

In Step 318, the H2O engine 122 determines if a prediction error of the model 110 is greater than a blacklist threshold, if yes, the flow enters Step 326; and if not, the flow enters Step 320. Specifically, because the model 110 is previously estimated and executed, the H2O engine 122 can exactly know a difference between the previous estimated execution time and the previous actual execution time of the model 110, and the H2O engine 122 can also exactly know a difference between the previous estimated memory usage and the previous actual memory usage when the model 110 is executed previously, wherein the above differences, alone or in combination, can be regarded as the prediction error of the model 110.

In Step 320, the H2O engine 122 determines if the prediction error of the model 110 is less than a whitelist threshold, if yes, the flow enters Step 322; and if not, the flow enters Step 324. In this embodiment, the blacklist threshold is greater than the whitelist threshold.

In Step 322, the H2O engine 122 uses the previous determined graph partition size for two or more processing circuits, that is, if the model 110 previously executed by the processing circuits is partitioned into a first graph with a first size and a second graph with a second size, now the H2O engine 122 also partition the model 110 into the first graph with the first size and the second graph with the second size.

In Step 324, the H2O engine 122 tunes the graph partition size based on the previous determined graph partition size and the prediction error of the model 110 as described in Steps 318 and 320, to generate an updated graph partition size. For example, if the actual execution time of a graph is greater than the previous predicted execution time, the H2O engine 122 may reduce the size of this graph to shorten the execution time.

In step 314, the H2O engine 122 determines the graph partition size for two or more processing circuits, that is, the H2O engine 122 can determine the workloads or number of operations of two or more processing circuits. In this embodiment, the H2O engine 122 can use the off-line tuned graph partition size, the previous determined graph partition size in Step 322, or the updated graph partition size in Step 324. In Step 316, the H2O engine 122 generates the graph for two or more processing circuits. For example, if the CPU 132 and the GPU 134 are determined to run the model 110, the H2O engine 122 may partition the model 110 into the first graph and the second graph, and the CPU 132 will run the operations of the first graph, while the GPU 134 will run the operations of the second graph.

In Step 326, the H2O engine 122 does not deploy the model 110 to more processing circuits, that is, the model 110 may only be executed by the CPU 132.

In the embodiment shown in FIG. 3, when the model 110 is an unknown model for the platform 120, the H2O engine 122 can perform runtime model analysis and runtime bandwidth estimation to partition the model 110 to obtain the graph partition size to generate two or more graphs for two or more processing circuits. Furthermore, the H2O engine 122 can update the graph partition size of the model 110 based on the previous determined graph partition size every time the model 110 is executed, to optimize the performance of the processing circuits. Therefore, the execution of the model 110 can become more and more efficient.

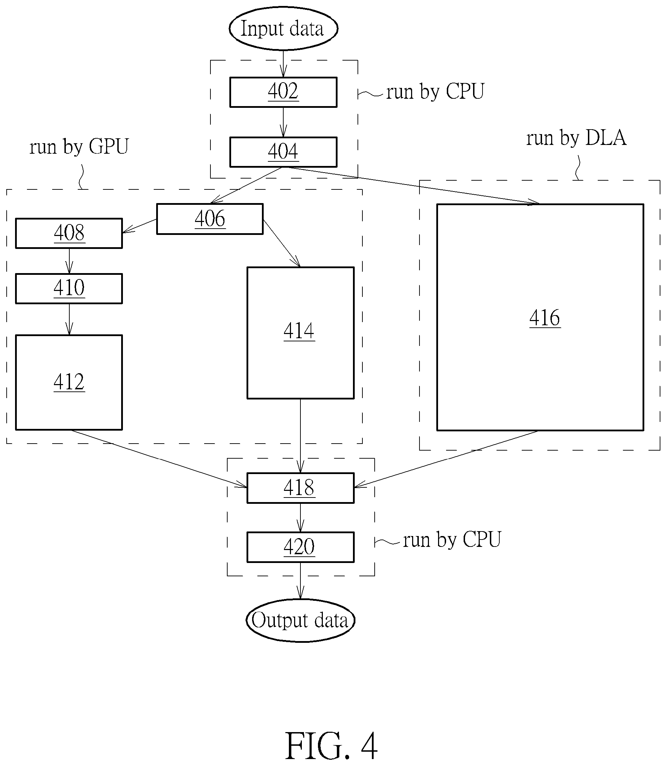

FIG. 4 shows a graph partition of a model 400 according to one embodiment of the present invention, wherein the model 400 may be an unknown model for the platform 110. As shown in FIG. 4, the model 400 comprises operations 402 - 420, and the H2O engine 122 can partition the operations into several graphs so that the CPU 132, the GPU 134 and the DLA 138 are used to execute the model 400. Specifically, the CPU 132 receives the input data and sequentially performs the operations 402 and 404 to output two results to the GPU 134 and the DLA 138, respectively. Then, the GPU 134 performs the operations 406 - 414 based on the result generated by the CPU 132 in Step 404, and the DLA 138 performs the operation 416 based on the other result generated by the CPU 132 is Step 404. Then, the CPU 132 executes the operations 418 and 420 based on the results generated by the GPU 134 and DLA 138 in Steps 412, 414 and 416, respectively, to generate the output data.

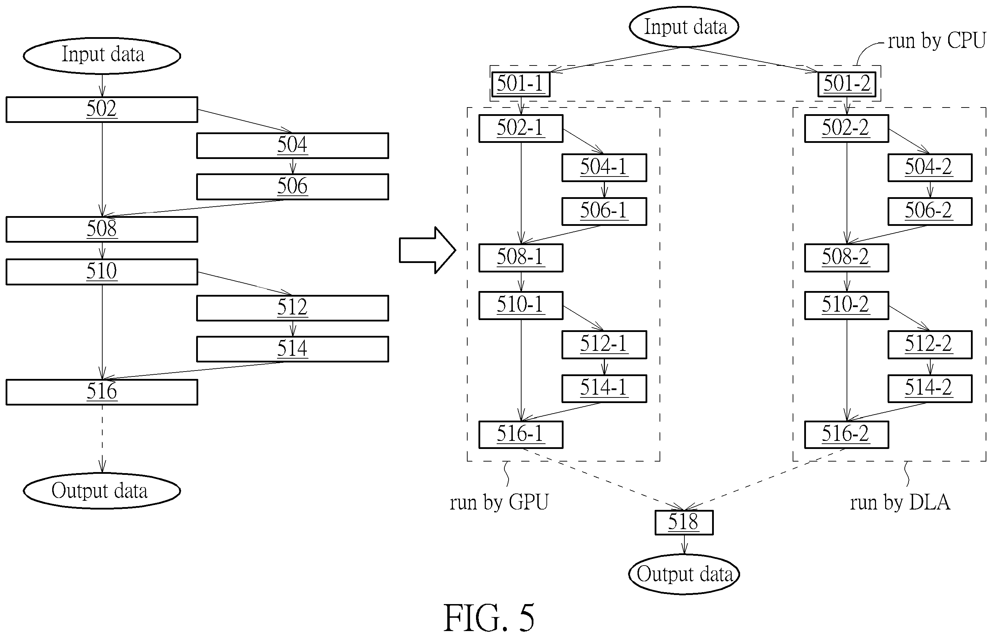

FIG. 5 shows a graph partition of a model 500 according to one embodiment of the present invention, wherein the model 500 may be an unknown model for the platform 110. As shown in FIG. 5, the model 500 comprises operations 502 - 516, and the H2O engine 122 can force the graph to be parallel, that is the H2O engine 122 partition each of the operations 502 - 516 into two parts, wherein the first graph after partitioning comprises operations 502_1 - 516_1, and the second graph after partitioning comprises operations 502_2 - 516_2. Initially, the CPU 132 receives the input data and sends the required data to the GPU 134 and the DLA 138, respectively (operations 501_1 and 501_2). Then, the GPU 134 performs the operations 502_1 - 516_1 based on the received input signal, and the DLA 138 performs the operations 502_2 - 516_2 based on the received input signal. Finally, the CPU 132 generates the output data based on the results generated by the GPU 134 and the DLA 138 (operation 518).

In addition, every time the model 500 is to be executed, the H2O engine 122 can tune the graph partition size to optimize the workloads of the operations 502_1 - 516_1 and 502_2 - 516_2, so that the GPU 134 and DLA 138 can execute the model 500 more efficient. For example, the execution times of the GPU 134 and DLA 138 may be 96.457 milliseconds (ms) and 124.219ms, respectively, when the model 500 is executed for the first time; the execution times of the GPU 134 and DLA 138 may be 98.383ms and 116.894ms, respectively, when the model 500 is executed for the second time; the execution times of the GPU 134 and DLA 138 may be 100.323ms and 109.009ms, respectively, when the model 500 is executed for the third time; and the execution times of the GPU 134 and DLA 138 may be 101.572ms and 101.955ms, respectively, when the model 500 is executed for the fourth time. As the execution times of the GPU 134 and DLA 138 will get closer to closer, the overall execution time of the system will become shorter.

Briefly summarized, in the H2O engine of the present invention, an artificial intelligence algorithm is used estimate the unknown model to predict the performance of two or more processing circuits to obtain a graph partition size, for generating two or more graphs to be simultaneously executed by the two or more processing circuits, respectively. Furthermore, the artificial intelligence algorithm is also used tune the graph partition size to optimize the workloads of two or more processing circuits every time the model is to be executed, so that the model will become more and more efficient in execution.

Those skilled in the art will readily observe that numerous modifications and alterations of the device and method may be made while retaining the teachings of the invention. Accordingly, the above disclosure should be construed as limited only by the appended claims.

## Claims

1. An electronic device comprising a plurality of processing circuits (132, 134, 136, 138), comprising:
a circuitry, configured to perform the steps of:
receiving a model (110, 400, 500) and input data for execution;
analyzing the model (110, 400, 500) to obtain a graph partition size of the model (110, 400, 500) corresponding to the workloads or number of operations of the plurality of processing circuits;
partitioning the model (110, 400, 500) into a plurality of graphs based on the graph partition size, wherein each of the graphs comprises a portion of operations of the model (110, 400, 500);
deploying the plurality of graphs to at least two of the processing circuits (132, 134, 136, 138), respectively, wherein the plurality of graphs are simultaneously executed by the at least two of the processing circuits (132, 134, 136, 138); and
generating output data according to results of the at least two of the processing circuits (132, 134, 136, 138) executing the plurality of graphs;
wherein the step of analyzing the model (110, 400, 500) to obtain a graph partition size of the model (110, 400, 500) comprises:
generating a prediction error of the model (110, 400, 500) according to a difference between a previous estimated execution time and a previous actual execution time of the model (110, 400, 500) when the model (110, 400, 500) was executed previously by the at least two of the processing circuits (132, 134, 136, 138); and
updating a previous graph partition size to generate the graph partition size according to the prediction error so that, when the model (110, 400, 500) that is partitioned into the plurality of graphs based on the graph partition size is executed, the execution times of the at least two of the processing circuits (132, 134, 136, 138) converge, compared to when the model (110, 400, 500) that was partitioned into a plurality of graphs based on the previous graph partition size was executed.

2. The electronic device of claim 1, wherein the model (110, 400, 500) is an unknown model for the plurality of processing circuits (132, 134, 136, 138) within the apparatus.

3. The electronic device of claim 1, wherein the model (110, 400, 500) is an artificial neural network model.

4. The electronic device of any one of the preceding claims, wherein the plurality of processing circuits (132, 134, 136, 138) comprise at least two of a central processing unit, CPU, (132) a graphics processing unit, GPU, (134) a vision processing unit, VPU, (136) and a deep learning accelerator, DLA (138).

5. The electronic device of any one of the preceding claims, wherein step of analyzing the model (110, 400, 500) to obtain the graph partition size of the model (110, 400, 500) comprises:
using a gradient boosting model to estimate the model (110, 400, 500) to obtain the graph partition size of the model (110, 400, 500).

6. A machine-readable storage medium comprising program codes, wherein when the program codes are executed by a processor, the processor performs the steps of:
receiving a model (110, 400, 500) and input data for execution;
analyzing the model (110, 400, 500) to obtain a graph partition size of the model (110, 400, 500) corresponding to the workloads or number of operations of the plurality of processing circuits;
partitioning the model (110, 400, 500) into a plurality of graphs based on the graph partition size, wherein each of the graphs comprises a portion of operations of the model (110, 400, 500);
deploying the plurality of graphs to at least two of the processing circuits (132, 134, 136, 138), respectively, wherein the plurality of graphs are simultaneously executed by the at least two of the processing circuits (132, 134, 136, 138); and
generating output data according to results of the at least two of the processing circuits executing the plurality of graphs;
wherein the step of analyzing the model (110, 400, 500) to obtain a graph partition size of the model (110, 400, 500) comprises:
generating a prediction error of the model (110, 400, 500) according to a difference between a previous estimated execution time and a previous actual execution time of the model (110, 400, 500) when the model (110, 400, 500) was executed previously by the at least two of the processing circuits (132, 134, 136, 138); and
updating a previous graph partition size to generate the graph partition size according to the prediction error so that, when the model (110, 400, 500) that is partitioned into the plurality of graphs based on the graph partition size is executed, the execution times of the at least two of the processing circuits (132, 134, 136, 138) converge, compared to when the model (110, 400, 500) that was partitioned into a plurality of graphs based on the previous graph partition size was executed.

7. The machine-readable storage medium of claim 6, wherein the model (110, 400, 500) is an unknown model for the plurality of processing circuits (132, 134, 136, 138) within the apparatus.

8. The machine-readable storage medium of claim 6 or claim 7, wherein the plurality of processing circuits (132, 134, 136, 138) comprise at least two of a central processing unit, CPU, (132) a graphics processing unit, GPU, (134) a vision processing unit, VPU, (136) and a deep learning accelerator, DLA (138).

9. The machine-readable storage medium of claim 6 or claim 7, wherein step of analyzing the model (110, 400, 500) to obtain a graph partition size of the model (110, 400, 500) comprises:
using a gradient boosting model to estimate the model (110, 400, 500) to obtain the graph partition size of the model (110, 400, 500).

## Patentansprüche

1. Elektronische Vorrichtung, umfassend eine Vielzahl von Verarbeitungsschaltungen (132, 134, 136, 138), umfassend:
eine Schaltungsanordnung, die konfiguriert ist, die Schritte durchzuführen:
Empfangen eines Modells (110, 400, 500) und von Eingabedaten zur Ausführung;
Analysieren des Modells (110, 400, 500), um eine Graph-Partitionsgröße des Modells (110, 400, 500) entsprechend den Arbeitslasten oder der Anzahl von Operationen der Vielzahl von Verarbeitungsschaltungen zu erhalten;
Partitionieren des Modells (110, 400, 500) in eine Vielzahl von Graphen basierend auf der Graph-Partitionsgröße, wobei jeder der Graphen einen Teil von Operationen des Modells (110, 400, 500) umfasst;
Verteilen der Vielzahl von Graphen an jeweils mindestens zwei der Verarbeitungsschaltungen (132, 134, 136, 138), wobei die Vielzahl von Graphen gleichzeitig durch die mindestens zwei der Verarbeitungsschaltungen (132, 134, 136, 138) ausgeführt werden; und
Erzeugen von Ausgabedaten gemäß Ergebnissen der mindestens zwei der Verarbeitungsschaltungen (132, 134, 136, 138), die die Vielzahl von Graphen ausführen;
wobei der Schritt des Analysierens des Modells (110, 400, 500), um eine Graph-Partitionsgröße des Modells (110, 400, 500) zu erhalten, umfasst:
Erzeugen eines Vorhersagefehlers des Modells (110, 400, 500) gemäß einer Differenz zwischen einer vorherigen geschätzten Ausführungszeit und einer vorherigen tatsächlichen Ausführungszeit des Modells (110, 400, 500), als das Modell (110, 400, 500) zuvor durch die mindestens zwei der Verarbeitungsschaltungen (132, 134, 136, 138) ausgeführt wurde; und
Aktualisieren einer vorherigen Graph-Partitionsgröße, um die Graph-Partitionsgröße gemäß dem Vorhersagefehler zu erzeugen, sodass, wenn das Modell (110, 400, 500), das basierend auf der Graph-Partitionsgröße in die Vielzahl von Graphen partitioniert ist, ausgeführt wird, die Ausführungszeiten der mindestens zwei der Verarbeitungsschaltungen (132, 134, 136, 138) konvergieren, verglichen damit, wenn das Modell (110, 400, 500), das basierend auf der vorherigen Graph-Partitionsgröße in eine Vielzahl von Graphen partitioniert wurde, ausgeführt wurde.

2. Elektronische Vorrichtung nach Anspruch 1, wobei das Modell (110, 400, 500) ein unbekanntes Modell für die Vielzahl von Verarbeitungsschaltungen (132, 134, 136, 138) innerhalb der Einrichtung ist.

3. Elektronische Vorrichtung nach Anspruch 1, wobei das Modell (110, 400, 500) ein künstliches neuronales Netzwerkmodell ist.

4. Elektronische Vorrichtung nach einem der vorhergehenden Ansprüche, wobei die Vielzahl von Verarbeitungsschaltungen (132, 134, 136, 138) mindestens zwei von einer zentralen Verarbeitungseinheit, CPU, (132), einer Grafikverarbeitungseinheit, GPU, (134), einer Bildverarbeitungseinheit (Vision Processing Unit), VPU, (136) und einem Deep-Learning-Beschleuniger, DLA (138), umfassen.

5. Elektronische Vorrichtung nach einem der vorhergehenden Ansprüche, wobei der Schritt des Analysierens des Modells (110, 400, 500), um die Graph-Partitionsgröße des Modells (110, 400, 500) zu erhalten, umfasst:
Verwenden eines Gradient-Boosting-Modells, um das Modell (110, 400, 500) zu schätzen, um die Graph-Partitionsgröße des Modells (110, 400, 500) zu erhalten.

6. Maschinenlesbares Speichermedium, umfassend Programmcodes, wobei, wenn die Programmcodes durch einen Prozessor ausgeführt werden, der Prozessor die Schritte durchführt:
Empfangen eines Modells (110, 400, 500) und von Eingabedaten zur Ausführung;
Analysieren des Modells (110, 400, 500), um eine Graph-Partitionsgröße des Modells (110, 400, 500) entsprechend den Arbeitslasten oder der Anzahl von Operationen der Vielzahl von Verarbeitungsschaltungen zu erhalten;
Partitionieren des Modells (110, 400, 500) in eine Vielzahl von Graphen basierend auf der Graph-Partitionsgröße, wobei jeder der Graphen einen Teil von Operationen des Modells (110, 400, 500) umfasst;
Verteilen der Vielzahl von Graphen an jeweils mindestens zwei der Verarbeitungsschaltungen (132, 134, 136, 138), wobei die Vielzahl von Graphen gleichzeitig durch die mindestens zwei der Verarbeitungsschaltungen (132, 134, 136, 138) ausgeführt werden; und
Erzeugen von Ausgabedaten gemäß Ergebnissen der mindestens zwei der Verarbeitungsschaltungen, die die Vielzahl von Graphen ausführen;
wobei der Schritt des Analysierens des Modells (110, 400, 500), um eine Graph-Partitionsgröße des Modells (110, 400, 500) zu erhalten, umfasst:
Erzeugen eines Vorhersagefehlers des Modells (110, 400, 500) gemäß einer Differenz zwischen einer vorherigen geschätzten Ausführungszeit und einer vorherigen tatsächlichen Ausführungszeit des Modells (110, 400, 500), als das Modell (110, 400, 500) zuvor durch die mindestens zwei der Verarbeitungsschaltungen (132, 134, 136, 138) ausgeführt wurde; und
Aktualisieren einer vorherigen Graph-Partitionsgröße, um die Graph-Partitionsgröße gemäß dem Vorhersagefehler zu erzeugen, sodass, wenn das Modell (110, 400, 500), das basierend auf der Graph-Partitionsgröße in die Vielzahl von Graphen partitioniert ist, ausgeführt wird, die Ausführungszeiten der mindestens zwei der Verarbeitungsschaltungen (132, 134, 136, 138) konvergieren, verglichen damit, wenn das Modell (110, 400, 500), das basierend auf der vorherigen Graph-Partitionsgröße in eine Vielzahl von Graphen partitioniert wurde, ausgeführt wurde.

7. Maschinenlesbares Speichermedium nach Anspruch 6, wobei das Modell (110, 400, 500) ein unbekanntes Modell für die Vielzahl von Verarbeitungsschaltungen (132, 134, 136, 138) innerhalb der Einrichtung ist.

8. Maschinenlesbares Speichermedium nach Anspruch 6 oder Anspruch 7, wobei die Vielzahl von Verarbeitungsschaltungen (132, 134, 136, 138) mindestens zwei von einer zentralen Verarbeitungseinheit, CPU, (132), einer Grafikverarbeitungseinheit, GPU, (134), einer Bildverarbeitungseinheit (Vision Processing Unit), VPU, (136) und einem Deep-Learning-Beschleuniger, DLA (138), umfassen.

9. Maschinenlesbares Speichermedium nach Anspruch 6 oder Anspruch 7, wobei der Schritt des Analysierens des Modells (110, 400, 500), um eine Graph-Partitionsgröße des Modells (110, 400, 500) zu erhalten, umfasst:
Verwenden eines Gradient-Boosting-Modells, um das Modell (110, 400, 500) zu schätzen, um die Graph-Partitionsgröße des Modells (110, 400, 500) zu erhalten.

## Revendications

1. Dispositif électronique comprenant une pluralité de circuits de traitement (132, 134, 136, 138), comprenant :
une circuiterie, configurée pour réaliser les étapes de :
réception d'un modèle (110, 400, 500) et de données d'entrée pour exécution ;
analyse du modèle (110, 400, 500) pour obtenir une taille de partition de graphe du modèle (110, 400, 500) correspondant aux charges de travail ou au nombre d'opérations de la pluralité de circuits de traitement ;
partitionnement du modèle (110, 400, 500) en une pluralité de graphes sur la base de la taille de partition de graphe, dans lequel chacun des graphes comprend une partie d'opérations du modèle (110, 400, 500) ;
déploiement de la pluralité de graphes sur au moins deux des circuits de traitement (132, 134, 136, 138), respectivement, dans lequel la pluralité de graphes est exécutée simultanément par les au moins deux des circuits de traitement (132, 134, 136, 138) ; et
génération de données de sortie selon des résultats des au moins deux des circuits de traitement (132, 134, 136, 138) exécutant la pluralité de graphes ;
dans lequel l'étape d'analyse du modèle (110, 400, 500) pour obtenir une taille de partition de graphe du modèle (110, 400, 500) comprend :
la génération d'une erreur de prédiction du modèle (110, 400, 500) en fonction d'une différence entre un temps d'exécution estimé précédent et un temps d'exécution réel précédent du modèle (110, 400, 500) lorsque le modèle (110, 400, 500) a été exécuté précédemment par les au moins deux des circuits de traitement (132, 134, 136, 138) ; et
la mise à jour d'une taille de partition de graphe précédente pour générer la taille de partition de graphe en fonction de l'erreur de prédiction afin que, lorsque le modèle (110, 400, 500) qui est partitionné en la pluralité de graphes sur la base de la taille de partition de graphe est exécuté, les temps d'exécution des au moins deux des circuits de traitement (132, 134, 136, 138) convergent, par rapport à l'exécution du modèle (110, 400, 500) qui a été partitionné en une pluralité de graphes sur la base de la taille de partition de graphe précédente.

2. Dispositif électronique selon la revendication 1, dans lequel le modèle (110, 400, 500) est un modèle inconnu pour la pluralité de circuits de traitement (132, 134, 136, 138) dans l'appareil.

3. Dispositif électronique selon la revendication 1, dans lequel le modèle (110, 400, 500) est un modèle de réseau neuronal artificiel.

4. Dispositif électronique selon l'une quelconque des revendications précédentes, dans lequel la pluralité de circuits de traitement (132, 134, 136, 138) comprend au moins deux d'une unité centrale de traitement, CPU, (132) d'une unité de traitement graphique, GPU, (134) d'une unité de traitement de vision, VPU, (136) et d'un accélérateur d'apprentissage profond, DLA (138).

5. Dispositif électronique selon l'une quelconque des revendications précédentes, dans lequel l'étape d'analyse du modèle (110, 400, 500) pour obtenir la taille de partition de graphe du modèle (110, 400, 500) comprend :
l'utilisation d'un modèle de gradient boosting pour estimer le modèle (110, 400, 500) afin d'obtenir la taille de partition de graphe du modèle (110, 400, 500).

6. Support de stockage lisible par machine comprenant des codes de programme, dans lequel, lorsque les codes de programme sont exécutés par un processeur, le processeur réalise les étapes de :
réception d'un modèle (110, 400, 500) et de données d'entrée pour exécution ;
analyse du modèle (110, 400, 500) pour obtenir une taille de partition de graphe du modèle (110, 400, 500) correspondant aux charges de travail ou au nombre d'opérations de la pluralité de circuits de traitement ;
partitionnement du modèle (110, 400, 500) en une pluralité de graphes sur la base de la taille de partition de graphe, dans lequel chacun des graphes comprend une partie d'opérations du modèle (110, 400, 500) ;
déploiement de la pluralité de graphes sur au moins deux des circuits de traitement (132, 134, 136, 138), respectivement, dans lequel la pluralité de graphes est exécutée simultanément par les au moins deux des circuits de traitement (132, 134, 136, 138) ; et
génération de données de sortie selon des résultats des au moins deux des circuits de traitement exécutant la pluralité de graphes ;
dans lequel l'étape d'analyse du modèle (110, 400, 500) pour obtenir une taille de partition de graphe du modèle (110, 400, 500) comprend :
la génération d'une erreur de prédiction du modèle (110, 400, 500) en fonction d'une différence entre un temps d'exécution estimé précédent et un temps d'exécution réel précédent du modèle (110, 400, 500) lorsque le modèle (110, 400, 500) a été exécuté précédemment par les au moins deux des circuits de traitement (132, 134, 136, 138) ; et
la mise à jour d'une taille de partition de graphe précédente pour générer la taille de partition de graphe en fonction de l'erreur de prédiction afin que, lorsque le modèle (110, 400, 500) qui est partitionné en la pluralité de graphes sur la base de la taille de partition de graphe est exécuté, les temps d'exécution des au moins deux des circuits de traitement (132, 134, 136, 138) convergent, par rapport à l'exécution du modèle (110, 400, 500) qui a été partitionné en une pluralité de graphes sur la base de la taille de partition de graphe précédente.

7. Support de stockage lisible par machine de la revendication 6, dans lequel le modèle (110, 400, 500) est un modèle inconnu pour la pluralité de circuits de traitement (132, 134, 136, 138) dans l'appareil.

8. Support de stockage lisible par machine selon la revendication 6 ou la revendication 7, dans lequel la pluralité de circuits de traitement (132, 134, 136, 138) comprend au moins deux d'une unité centrale de traitement, CPU, (132) d'une unité de traitement graphique, GPU, (134) d'une unité de traitement de vision, VPU, (136) et d'un accélérateur d'apprentissage profond, DLA (138).

9. Support de stockage lisible par machine selon la revendication 6 ou la revendication 7, dans lequel l'étape d'analyse du modèle (110, 400, 500) pour obtenir une taille de partition de graphe du modèle (110, 400, 500) comprend :
l'utilisation d'un modèle de gradient boosting pour estimer le modèle (110, 400, 500) afin d'obtenir la taille de partition de graphe du modèle (110, 400, 500).
